(19) **Europäisches Patentamt / European Patent Office / Office européen des brevets**

(11) **EP 4 622 348 A2**

(12) # EUROPEAN PATENT APPLICATION

(43) Date of publication:
24.09.2025 Bulletin 2025/39

(21) Application number: 25194772.7

(22) Date of filing: 10.03.2021

(51) International Patent Classification (IPC):
*H04W 48/12* $^{(2009.01)}$

(52) Cooperative Patent Classification (CPC):
**H04W 52/0235; H04L 5/0053; H04W 48/12;**
**H04W 52/02; H04W 52/0216; H04W 52/0229;**
**H04W 52/0245; H04W 52/028;** H04W 56/00;
H04W 68/025; Y02D 30/70

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(62) Document number(s) of the earlier application(s) in
accordance with Art. 76 EPC:
**21929556.5 / 4 274 315**

(71) Applicant: **GUANGDONG OPPO MOBILE**
**TELECOMMUNICATIONS**
**CORP., LTD.**
**Dongguan, Guangdong 523860 (CN)**

(72) Inventor: **HE, Chuanfeng**
**Dongguan,Guangdon, 523860 (CN)**

(74) Representative: **Penza, Giancarlo**
**Bugnion S.p.A.**
**Viale Lancetti, 17**
**20158 Milano (IT)**

Remarks:
This application was filed on 08-08-2025 as a
divisional application to the application mentioned
under INID code 62.

(54) **WIRELESS COMMUNICATION METHOD, TERMINAL DEVICE AND NETWORK DEVICE**

(57)     Provided in the embodiments of the present application are a wireless communication method, a terminal device and a network device, which can realize multi-beam transmission of an energy-saving signal. The wireless communication method includes that: a terminal device detects an energy-saving signal at a plurality of target time units, wherein the energy-saving signal is used for instructing the terminal device on whether to monitor a PDCCH, which carries paging indication information, on a target PO; and there is a first correspondence between the plurality of target time units and a plurality of PDCCH monitoring occasions in the target PO, or there is a second correspondence between the plurality of target time units and a plurality of SSBs.

Processed by Luminess, 75001 PARIS (FR)

**Description**

TECHNICAL FIELD

The embodiments of the present disclosure relate to the communication field, and more particularly, to a wireless communication method, a terminal device and a network device.

BACKGROUND

For a terminal device in a Radio Resource Control (RRC) idle state, through a received power saving signal, the terminal device can determine whether to receive a Physical Downlink Control Channel (PDCCH) that carries paging indication information, on a target Paging Occasion (PO). It is an urgent problem to be solved on how to determine the monitoring occasion for the power saving signal to realize multi-beam transmission of power-saving signal.

SUMMARY

The embodiments of the disclosure provide a wireless communication method, a terminal device and a network device, which can realize multi-beam transmission of the power saving signal.

In a first aspect, a wireless communication method is provided, the method comprising:

monitoring, by a terminal device, a power saving signal on a plurality of target time units, the power saving signal indicating whether the terminal device is to monitor a Physical Downlink Control Channel (PDCCH), which carries paging indication information, on a target Paging Occasion (PO).

The plurality of target time units have a first correspondence relationship with a plurality of PDCCH monitoring occasions within the target PO, or the plurality of target time units have a second correspondence relationship with a plurality of Synchronization Signal Blocks (SSBs).

In a second aspect, a wireless communication method is provided, the method comprising: transmitting, by a network device, a power saving signal to a terminal device on a plurality of target time units, the power saving signal indicating whether the terminal device is to monitor to a PDCCH, which carries paging indication information, on a target PO.

The plurality of target time units have a first correspondence relationship with a plurality of PDCCH monitoring occasions within the target PO, or the plurality of target time units have a second correspondence relationship with a plurality of SSBs.

In a third aspect, a terminal device for performing the method in the above first aspect is provided.

Specifically, the terminal device includes functional modules for performing the method in the first aspect described above.

In a fourth aspect, a network device for performing the method in the above second aspect is provided.

Specifically, the network device includes functional modules for performing the method in the second aspect described above.

In a fifth aspect, a terminal device including a processor and a memory is provided. The memory is configured to store a computer program, and the processor is configured to call and run the computer program stored in the memory to perform the method in the first aspect described above.

In a sixth aspect, a network device including a processor and a memory is provided. The memory is configured to store a computer program, and the processor is configured to call and run the computer program stored in the memory to perform the method in the second aspect described above.

In a seventh aspect, an apparatus for implementing the method in any one of the above first aspect to second aspect is provided.

Specifically, the apparatus includes a processor, which is configured to call and run a computer program in a memory such that a device mounted with the apparatus performs the method in any one of the first aspect to second aspect described above.

In an eighth aspect, a computer-readable storage medium for storing a computer program is provided. The computer program enables a computer to perform a method in any one of the first aspect to second aspect described above.

In a ninth aspect, a computer program product including computer program instructions is provided. The computer instructions cause a computer to perform the method in any one of the first aspect to second aspect described above.

In a tenth aspect, a computer program is provided. When running on a computer, the computer program enables the computer to perform the method in any one of the first aspect to second aspect described above.

Through the technical solutions above, the terminal device can monitor the power saving signal on the plurality of target time units, thereby realizing the multi-beam transmission of the power saving signal.

BRIEF DESCRIPTION OF THE DRAWINGS

FIG. 1 is a schematic diagram of a communication system architecture to which the embodiments of the present disclosure are applied.

FIG. 2 is a schematic diagram of a power saving signal indicating whether to monitor a PDCCH provided by the present disclosure.

FIG. 3 is a schematic diagram of a power saving wake-up signal carrying a multi-user power saving signal provided by the present disclosure.

FIG. 4 is a schematic diagram of monitoring a power saving signal provided by the present disclosure.

FIG. 5 is a schematic diagram of a Paging Frame (PF) and a PO provided by the present disclosure.

FIG. 6 is a schematic flow diagram of a wireless communication method according to an embodiment of the present disclosure.

FIG. 7 is a schematic diagram of S monitoring occasions for the PEI corresponding to S monitoring occasions for paging the PDCCH according to an embodiment of the present disclosure.

FIG. 8 is a schematic diagram of a first time offset and a set of PEI monitoring occasions according to an embodiment of the present disclosure.

FIG. 9 is a schematic diagram of a second time offset, a third time offset, and a set of PEI monitoring occasions according to an embodiment of the present disclosure.

FIG. 10 is a schematic block diagram of a terminal device according to an embodiment of the present disclosure.

FIG. 11 is a schematic block diagram of a network device according to an embodiment of the present disclosure.

FIG. 12 is a schematic block diagram of a communication device according to an embodiment of the present disclosure.

FIG. 13 is a schematic block diagram of an apparatus according to an embodiment of the present disclosure.

FIG. 14 is a schematic block diagram of a communication system according to an embodiment of the present disclosure.

DETAILED DESCRIPTION

The technical aspects of the embodiments of the present disclosure will be described below in conjunction with the drawings in the embodiments of the present disclosure, and it will be obvious that the described embodiments are part of the embodiments of the present disclosure, but not all of them. With respect to the embodiments in the present disclosure, all other embodiments obtained by those of ordinary skill in the art without making creative efforts fall within the scope of protection of the present disclosure.

The technical solutions of the embodiments of the present disclosure may be applied to various communication systems. For example, Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced LTE (LTE-A) system, New Radio (NR) system, evolution system of NR system, LTE-based access to unlicensed spectrum (LTE-U) system, NR-based access to unlicensed spectrum (NR-U) system, Non-Terrestrial Networks (NTN) system, Universal Mobile Telecommunication System (UMTS), Wireless Local Area Network (WLAN), Wireless Fidelity (WiFi), 5th-Generation (5G) system or other communication systems.

In general, conventional communication systems support a limited number of connections and are easy to implement. However, with the development of communication technology, mobile communication systems will not only support conventional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc. Embodiments of the present disclosure may also be applied to these communication systems.

In some embodiments, the communication system in the embodiments of the present disclosure may be applied to a Carrier Aggregation (CA) scenario, a Dual Connectivity (DC) scenario and a Standalone (SA) scenario.

In some embodiments, the communication system in the embodiments of the present disclosure may be applied to an unlicensed spectrum, and the unlicensed spectrum may also be considered a shared spectrum. Optionally, the communication system in the embodiments of the present disclosure may also be applied to an authorized spectrum, and the authorized spectrum may also be considered as a non-shared spectrum.

The embodiments of the present disclosure are described in connection with a network device and a terminal device. The terminal device may also be referred to as a User Equipment (UE), an access terminal, a subscriber unit, a subscriber station, a mobile station, a mobile platform, a remote station, a remote terminal, a mobile device, a user terminal, a terminal, a wireless communication device, a user agent or a user device, etc.

The terminal device may be a STATION (ST) in the WLAN, or it may be a cellular telephone, a cordless telephone, a Session Initiation Protocol (SIP) telephone, a Wireless Local Loop (WLL) Station, a Personal Digital Assistant (PDA) device, a handheld device with wireless communication functions, a computing device or other processing devices connected to a wireless modem, an in-vehicle device, a wearable device, a terminal device in a next generation communication system such as an NR network, or a terminal device in future evolved Public Land Mobile Network (PLMN) network, etc.

In the embodiments of the present disclosure, the terminal device may be deployed on land including indoors, outdoors, hand-held, wearable and in-vehicle. The terminal device may also be deployed on the water (such as ships, etc.). The terminal device may also be deployed in the air (such as airplanes, balloons and satellites, etc.).

In the embodiments of the present disclosure, the terminal device may be a Mobile Phone (Mobile Phone), a Pad, a computer with wireless transceiver function, a Virtual Reality (VR) terminal device, an Augmented Reality (AR) terminal device, a wireless terminal device under industrial control, a wireless terminal device in self driving, a wireless terminal device in remote medical, a wireless terminal device in smart grid, a wireless terminal device in transportation safety, a wireless terminal device in smart city, and a smart home, etc.

By way of examples but not limitation, in the embodiments of the present disclosure, the terminal device may also be a wearable device. Wearable devices may also be called wearable intelligent devices, which are the general name of wearable devices developed by applying wearable technology to intelligently design daily wear, such as glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. Generalized wearable smart devices include full functions and large size, which can realize complete or partial functions without relying on smart phones, such as smart watches or smart glasses, and only focus on certain application functions, which need to be used in conjunction with other devices such as smart phones, such as various smart bracelets and smart jewelry for monitoring physical signs.

In the embodiments of the present disclosure, the network device may be a device for communicating with a mobile device, and the network device may be an Access Point (AP) in a WLAN, a Base Transceiver Station (BTS) in a GSM or CDMA, a base station (NodeB, NB) in a WCDMA, an Evolved Node B (eNB or eNodeB) in a LTE, or a relay station or an AP, or an in-vehicle device, a wearable device, a network device or a base station (gNB) in an NR network, or a network device in a future evolved PLMN network or a network device in an NTN network, etc.

By way of example but not limitation, in the embodiments of the present disclosure, the network device may have mobility characteristics, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. In some embodiments, the network device may also be a base station arranged on land, water, and the like.

In the embodiments of the present disclosure, the network equipment may provide services for a cell, and the terminal device communicates with the network device through transmission resources (for example, frequency domain resources, or spectrum resources) used by the cell. The cell may be a cell corresponding to a network equipment (for example, a base station), and the cell may belong to a macro base station or a base station corresponding to a Small cell. The Small cell may include a Metro cell, a Micro cell, a Pico cell and a Femto cell, etc. These Small cells have the characteristics of small coverage and low transmission power, and are suitable for providing high-speed data transmission services.

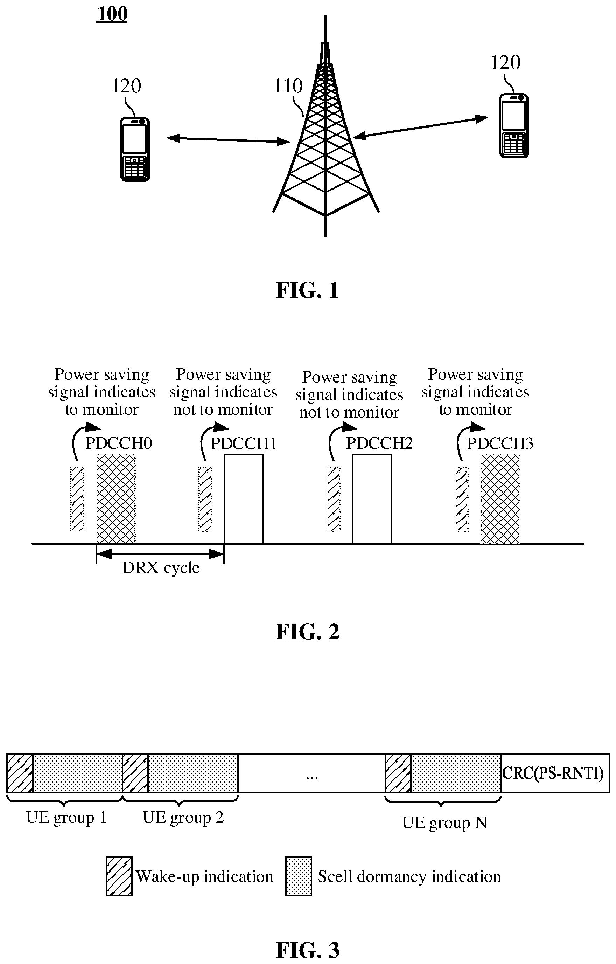

As an example, a communication system 100 to which the embodiments of the present disclosure are applied is illustrated in FIG. 1. The communication system 100 may include a network device 110, which may be a device that communicates with a terminal device 120 (or referred to as a communication terminal and a terminal). The network device 110 may provide communication coverage for a specific geographic area and may communicate with terminal devices located within the coverage area.

FIG. 1 exemplarily illustrates one network device and two terminal devices. In some embodiments, the communication system 100 may include multiple network devices and other numbers of terminal devices may be included within the coverage of each network device, which is not limited by the embodiments of the present disclosure.

In some embodiments, the communication system 100 may also include other network entities, such as network controllers and mobility management entities, and the like, which is not limited by the embodiments of the present disclosure.

It should be understood that a device with communication functions in a network/system in the embodiments of the present disclosure may be referred to as a communication device. Taking the communication system 100 illustrated in FIG. 1 as an example, the communication device may include a network device 110 and a terminal device 120 with communication functions, and the network device 110 and the terminal device 120 may be specific devices described above, which will not be described herein. The communication device may also include other devices in the communication system 100, such as network controllers, mobility management entities and other network entities, which is not limited in embodiments of the present disclosure.

It should be understood that the terms "system" and "network" are often used interchangeably herein. In this context, the term "and/or" is merely an association relationship that describes associated objects, indicating that there can be three relationships. For example, A and/or B may mean that there are three situations: A exists separately, both A and B exist, and B exist separately. Furthermore, the character "/" herein generally indicates that the relationship between the related objects is "or".

Terms used in the embodiments of this disclosure are used only for explanation of specific embodiments of this disclosure and are not intended to be limiting. The terms "first", "second", "third", "fourth" and the like in the specification, claims and the accompanying drawings of the present disclosure are used to distinguish different objects, rather than describing a particular order. Furthermore, the terms "including" and "having" and any variations thereof are intended to cover non-exclusive inclusion.

It should be understood that the reference to "indication" in embodiments of the present disclosure may be a direct indication, an indirect indication, or indicative of an association. For example, A indicates B may mean that A indicates B directly, for example, B may be obtained through A. It may also mean that A indicates B indirectly, for example, A indicates C and B may be obtained by C. It may also indicate that there is an association between A and B.

In the description of the embodiments of the present disclosure, the term "correspondence" may mean that there is a direct correspondence relationship or an indirect correspondence relationship between the two, may also mean that there is an association relationship between the two, or it may also be a relationship between indication and being indicated, configuration and being configured, etc.

In the embodiments of the present disclosure, "predefined" may be achieved by pre-storing corresponding codes, tables or other means that may be used to indicate relevant information in devices (such as including terminal devices and network devices), and the present disclosure is not limited to the specific implementations thereof. For example, predefined may refer to defined by protocol.

In the embodiments of the present disclosure, "protocol" may refer to a standard protocol in the communication field. For example, it may include an LTE protocol, an NR protocol and related protocols applied in future communication systems, which are not limited in the present disclosure.

Discontinuous Reception (DRX) related to the present disclosure is described in order to facilitate a better understanding of the embodiments of the present disclosure.

In order to reduce the power consumption of the terminal, both LTE and NR systems have a DRX mechanism, which makes the terminal enter a discontinuous receiving state instead of turning on the receiver all the time without receiving data, thus achieving the purpose of saving power. The DRX mechanism includes configuring a DRX cycle for a terminal in a RRC connection (RRC_CONNECTED) state, and a DRX cycle consists of "On Duration" and "Opportunity for DRX". During the "On Duration", the terminal monitors and receives downlink channels and signals, which include a Physical Downlink Control Channel (PDCCH). During the "Opportunity for DRX", the terminal does not receive downlink channels and signals, such as PDCCH, to reduce power consumption. The terminal in the RRC idle state needs to receive paging messages in a similar way to the DRX. There is a Paging Occasion (PO) in a DRX cycle, and the terminal only receives paging messages on the PO, but does not receive paging messages beyond PO, so as to achieve the purpose of saving power. During the PO, the terminal determines whether there is a paging message by detecting a PDCCH signal scrambled with Paging Radio Network Temporary Identity (P-RNTI).

In the evolution of 5G, higher requirements are required for terminal power saving. For example, for the DRX mechanism, during each On Duration, the terminal needs to constantly detect the PDCCH to determine whether a base station schedules data transmission to-be-sent to the terminal itself. However, for most terminals, there may be no need to receive data transmission for a long time, but the terminals still need to maintain a regular wake-up mechanism to monitor possible downlink transmission. For such terminals, there is room for further optimization of power saving. The same is true for a terminal in the RRC idle state to receive paging messages.

In Release 16 (Rel-16) standard, the power saving signal is introduced to realize further power saving. The power saving signal is used in combination with the DRX mechanism, and the terminal receives an indication of the power saving wake-up signal before the DRX ON Duration. The power saving wake-up signal "wakes up" the terminal when the terminal has data transmission in a DRX cycle, so as to monitor the PDCCH in the DRX On Duration. Otherwise, the power saving wake-up signal does not "wake up" the terminal when the terminal has no data transmission in the DRX cycle, and the terminal does not need to monitor PDCCH in the DRX On Duration. The terminal may omit PDCCH monitoring in the DRX On Duration when the terminal has no data transmission, thereby realizing power saving. The time that the terminal is beyond the DRX On Duration is referred to as an inactive time, and the time that the terminal is within the DRX On Duration is referred to as an active time. The process of indicating, by the power saving signal, whether the terminal is to monitor the PDCCH in the DRX On Duration is illustrated in FIG. 2.

In the Rel-16 standard, the power saving signal is carried by a newly defined DCI format 2_6. The network configures the terminal to detect a search space set of PDCCH that carries the DCI format 2_6. In the power saving signal, the maximum number of bits required by a single user is 6, and 1 wake-up indication bit and up to 5 Secondary cell (Scell) dormancy indication bits are included. The power saving signal carries indication bits of a plurality of users to improve resource utilization efficiency. As illustrated in FIG. 3, the network informs each user of a starting position of the power saving indication bits in Downlink Control Information (DCI), and the number of bits for a single user may be implicitly obtained from the configured number of Scell (carrier) packets (the wake-up indication bits must appear, and the number of Scell (carrier) dormancy indication bits can be 0). Furthermore, the network informs the terminal of a total number of bits of the DCI and the Power Saving Radio Network Temporary Identity (PS-RNTI) for scrambling the PDCCH. As illustrated in FIG. 3, the PS-RNTI for scrambling the PDCCH is indicated in the Cyclic Redundancy Check (CRC) section.

The monitoring occasions for PDCCH have a certain timing relationship with a time window of DRX On Duration. The network configures a Power Saving offset (PS-offset) to determine a starting position of PDCCH monitoring occasions. After the starting position of PDCCH monitoring occasions is determined, it is necessary to further determine an end position of PDCCH monitoring occasions, which is determined by device capability of the terminal. The terminal needs to perform operations, such as device wake-up and initialization after being waken up, in a minimum time interval before DRX ON, so that in the minimum time interval before the DRX ON, the terminal does not need to monitor the power saving wake-up signal. A shorter minimum time interval may be used for terminals with faster processing speed, as a value 1 shown in Table 1 below. A longer minimum time interval is required for terminals with slower processing spped, as a value 2 shown in Table 1 below.

Table 1

| Subcarrier spacing (kHz) | Minimum time interval (slot) | |
|---|---|---|
| | value 1 | Value 2 |
| 15 | 1 | 3 |
| 30 | 1 | 6 |
| 60 | 1 | 12 |
| 120 | 2 | 24 |

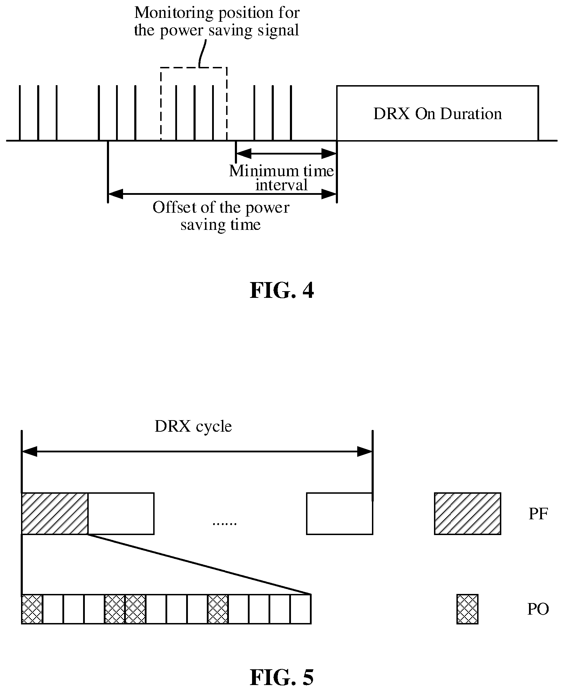

The power saving signal starts from a time position indicated by the PS-offset, which is configured by the network. The power saving signal is monitored within a complete PDCCH monitoring occasion (defined by the parameter "duration" of the PDCCH search space) after the starting point, and the position of the monitored power saving signal is before the time duration corresponding to the minimum time interval. As illustrated in FIG. 4 below, the terminal monitors the monitoring occasions for the power saving signal indicated by the dashed box.

Paging related to the present disclosure is explained to facilitate a better understanding of the embodiments of the present disclosure.

In an NR system, a network may transmit paging to a terminal in an idle state and an RRC-Connection state. The paging process may be triggered by a core network or a base station so as to transmit a paging request to the terminal in the idle state, or to inform an update of system information, and to inform the terminal to receive information such as Earthquake and Tsunami Warning System (ETWS) and Commercial Mobile Alert System (CMAS). After receiving the paging message from the core network, the base station interprets the contents thereof to obtain a Tracking Area Identity (TAI) list (TAI) of the terminal, and carries out NR paging in a cell belonging to the tracking area in the list. The core domain of the paging message is not decoded at the base station, but transmitted to the terminal through. After receiving the paging message from the core network, the base station aggregates the paging messages of the terminals with the same PO into a paging message, which is transmitted to the related terminals through the paging channel. The terminal receives the paging parameters through the system message, calculates the PO in combination with its own user equipment identification (UE_ID), and receives the paging message at the corresponding time. The paging message is carried by a Physical Downlink Shared Channel (PDSCH), and the terminal obtains paging indication information by detecting the PDCCH scrambled with P-RNTI, thereby receiving the paging message. The terminal in idle state will save power in a DRX way, and the terminal will obtain DRX related information from System Information Block 2 (SIB 2). A PO on a paging frame (PF) in a DRX cycle receives paging messages by monitoring the PDCCH scrambled with the R-RNTI.

PF indicates which system frame number the paging message should appear on, and PO indicates the possible time when the paging message appear. A PF frame may include one or more POs, for each DRX cycle or Paging Cycle, the terminal only needs to monitor its own PO. A System Frame Number (SFN) satisfying formula 1 below can be used as a PF frame.

$$(SFN + PF\_offset) \bmod T = (T \text{ div } N) * (UE\_ID \bmod N) \qquad \text{formula 1}$$

Within the PF, the index of a PO corresponding to UE_ID, i.e. i_s, can be calculated according to formula 2 below.

$$i\_s = floor(UE\_ID/N) \bmod Ns \qquad \text{formula 2}$$

In the above formula 1 and formula 2, T denotes the DRX cycle of the UE. If the default DRX cycle indicated in the system message is denoted as T_sib, then T = min (T_ue, T_sib) if the DRX value T_ue of the UE has been configured. If T_ue is not configured, using the default value indicated in the system message, then T = T_sib. UE_ID= (5G-S-TMSI mod 1024), and 5G-S-TMSI is the 5G-Service-Temporary Mobile Subscriber Identity (5G-S-TMSI) obtained by UE from the core network. N is the number of PFs within the T. Ns is the number of POs in a PF. PF_offset is the frame offset used to determine the PF. As illustrated in Figure 5 below, a position of the PF within a DRX cycle, and a position of the PO within the PF.

In NR technology, for the terminal in the idle state, the base station does not know what beam to use to transmit paging for the terminal, thus it adopts the mode of wave speed scanning to transmit paging. To support multi-beam transmission of paging, a PO is defined as a set of PDCCH monitoring occasions, and a PF may include one or more POs or a start time position of PO. In a case that the search space identification (SearchSpaceId) of the paging search space is 0, as each Synchronization Signal Block (SSB) index corresponds to a PDCCH monitoring occasion and different SSB indexes correspond to different beams, thus multi-beam transmission of paging can be supported through a plurality of PDCCH occasions corresponding to different SSB indexes of a PO. In a case that the SearchSpaceId of the paging search space is not 0, a PO includes "S*X" successive PDCCH monitoring occasions. S is a number of SSBs transmitted at the occasion, which is indicated by SSB burst position information (ssb-PositionsInBurst) in System Information Block 1 (SIB1). X is a parameter indicated by the information of the number of PDCCH monitoring occasions corresponding to each SSB (nrofPDCCH-MonitoringOccasionPerSSB-InPO), which indicates a number of PDCCH monitoring occasions corresponding to each SSB. In a case that this parameter is not configured, X is 1. The [x*S+K]-th PDCCH monitoring occasions within a PO corresponds to the K-th actually transmitted SSB, where x=0, 1, ..., X-1, K=1, 2, ..., S. For example, if S=8 and X=2, a PO includes 16 PDCCH monitoring occasions, and the SSB index corresponding to the 16 PDCCH monitoring occasions in chronological order is "0123456701234567", where the index numbers of 8 SSBs are 0-7.

It should be noted that SSB can also be referred to as a synchronization signal/physical broadcast channel block (SS/PBCH block).

The Rel-16 standard defines power saving technology for connected terminals. The network can configure a terminal-specific PDCCH search space set for the terminal to receive power saving signals. For the connected terminal, the base station can determine the beam information for transmitting the power saving signal, so it is unnecessary to transmit the power saving signal by beam scanning.

For the terminal in the RRC idle state, the main power consumption lies in receiving paging messages periodically. How to design the power saving signal received by the terminal in RRC idle state is a problem that needs to be solved in Rel-17 standard. In the related art, a paging early indication (PEI) is used to indicate whether a terminal device is to receive a PDCCH that carries paging indication information, on a target PO. The PEI can be carried by the PDCCH, or a reference signal or a synchronization signal. However, how to realize multi-beam transmission of PEI is a problem that needs to be solved.

Based on the above problems, the present disclosure provides a solution for multi-beam transmission of the power saving signal, which can realize multi-beam transmission of the power saving signal.

The technical solution of the present disclosure will be described in detail by specific embodiments below.

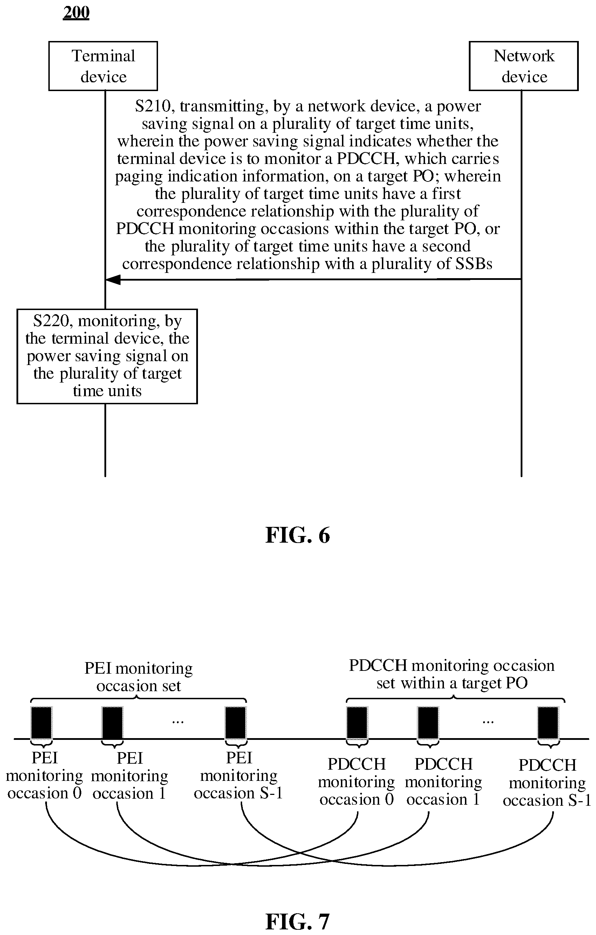

FIG. 6 is a schematic flow diagram of a wireless communication method 200 according to an embodiment of the present disclosure. As illustrated in FIG. 6, the method 200 may include at least some of the following.

At S210, the network device transmits a power saving signal to the terminal device on a plurality of target time units, here the power saving signal indicates whether the terminal device is to monitor the PDCCH, which carries paging indication information, on a target PO.

The plurality of target time units have a first correspondence relationship with a plurality of PDCCH monitoring occasions within the target PO, or the plurality of target time units have a second correspondence relationship with a plurality of SSBs.

At S220, the terminal device monitors the power saving signal on the plurality of target time units.

In the embodiments of the present disclosure, a PDCCH that carries a paging DCI is transmitted on the plurality of PDCCH monitoring occasions within a PO. For the power saving signal, it is also required to be transmitted through the plurality of target time units, thereby realizing multi-beam transmission of the power saving signal.

In the embodiments of the present disclosure, the plurality of target time units have a correspondence relationship (a first correspondence relationship) with the plurality of PDCCH monitoring occasions within the target PO, or the plurality of target time units have a correspondence relationship (a second correspondence relationship) with a plurality of SSBs, so that the plurality of target time units can be determined based on these correspondence relationship.

In some embodiments, the power saving signal may be carried by at least one of: the PDCCH, a Tracking reference signal (TRS), a Channel State Information Reference Signal (CSI), or a Secondary Synchronization Signal (SSS).

In some embodiments, the power saving signal is a paging early indication (PEI).

In some embodiments, in a case that the plurality of target time units have the first correspondence relationship with the plurality of PDCCH monitoring occasions within the target PO, the terminal device and/or the network device may determine the plurality of target time units according to the plurality of PDCCH monitoring occasions within the target PO and the first correspondence relationship, thus realizing multi-beam transmission of the power saving signal.

For example, the plurality of PDCCH monitoring occasions are part or all of the PDCCH monitoring occasions within the target PO.

In some embodiments, a number of the plurality of PDCCH monitoring occasions within the target PO is equal to a product of a first parameter and a number of actually transmitted SSBs indicated by SSB burst position information (ssb-PositionsInBurst). The first parameter indicates a number of PDCCH monitoring occasions corresponding to each SSB.

Specifically, SSB burst position information (ssb-PositionsInBurst) may be obtained for example from SIB1. The number of SSBs actually transmitted indicated by SSB burst position information may be a parameter S, and the first parameter may be a parameter X determined from the nrofPDCCH-MonitoringOccasionPerSSB-InPO information. The number of PDCCH monitoring occasions within the target PO may be S*X.

In some embodiments, in the first correspondence relationship, the target time units satisfy a one-to-one or many-to-one relationship with the PDCCH monitoring occasions.

For example, in the first correspondence relationship, the target time units satisfy a one-to-one relationship with the PDCCH monitoring occasions in a chronological order. For example, among the "S*X" power saving signal monitoring occasions, the [x*S+K]-th power saving signal monitoring occasions correspond to the K-th actually transmitted SSB, where x=0, 1, ..., X-1, K=1, 2, ..., S.

For example, in a case of X=1, as illustrated in FIG. 7, S monitoring occasions (target time units) for the PEI correspond to S PDCCH monitoring occasions within the target PO.

In some embodiments, the first correspondence relationship is agreed by protocol or pre-configured, or the first correspondence relationship is configured by a network device.

In some embodiments, in a case that the plurality of target time units have the second correspondence relationship with the plurality of SSBs, the terminal device and/or the network device may determine the plurality of target time units according to the plurality of SSBs and the second correspondence relationship, thus realizing multi-beam transmission of the power saving signal.

For example, the plurality of SSBs are actually transmitted SSBs indicated by SSB burst location information, as the parameter S described above. That is, the plurality of target time units may be related only to the parameter S indicated by SSB burst location information (ssb-PositionsInBurst).

In some embodiments, a number of the plurality of target time units is equal to a number of the plurality of SSBs, or the number of the plurality of target time units is equal to a product of a second parameter and the number of the plurality of SSBs.

For example, the determined "S" monitoring occasions (the plurality of target time units) for the power saving signal have a correspondence relationship with "S*X" PDCCH monitoring occasions within the target PO. The K-th power saving signal monitoring occasion corresponds to X PDCCH monitoring occasions, and the X monitoring occasions for PDCCH correspond to the same value K, that is, correspond to the same SSB index.

For another example, the determined "S*Y" monitoring occasion for the power saving signal have a correspondence relationship with "S*X" PDCCH monitoring occasions within the target PO. Y is the second parameter described above, and Y power saving signal monitoring occasions correspond to X PDCCH monitoring occasions, and Y power saving signal monitoring occasions and X PDCCH monitoring occasions correspond to the same value K, that is, correspond to the same SSB index.

In some embodiments, the second parameter is agreed by protocol or pre-configured, or the second parameter is configured by the network device.

In some embodiments, in the second correspondence relationship, the target time units satisfy a one-to-one or many-to-one relationship with the SSB.

In some embodiments, the second correspondence relationship is agreed by protocol or pre-configured, or the second correspondence relationship is configured by a network device.

In the embodiments of the present disclosure, since the power saving signal (such as PEI) is transmitted before the target PO, a preparation time for receiving a paging on the target PO according to the power saving signal (such as PEI) needs to be reserved for the terminal device. Furthermore, in the idle state, the terminal device also needs a certain time for time-frequency synchronization recovery before receiving the paging. The preparation time and/or time-frequency synchronization recovery time may be denoted as a time interval, which is related to the configuration of the SSB. The time interval is a minimum time interval that needs to be guaranteed between the latest reception time of the power saving signal (such as PEI) and the target PO. In some embodiments, the network may also configure a power saving time offset (PS-offset), which determines the start time for monitoring the power saving signal.

In some embodiments, the plurality of target time units are determined according to a first time offset.

It should be noted that, since the energy-saving signal (such as PEI) needs to be transmitted on a plurality of transmission occasions, in order to meet time requirements (the preparation time and the time-frequency synchronization recovery time) of the terminal device before the arrival of the target PO, monitoring occasions set (a plurality of target time units) of the power saving signal (such as PEI) needs to satisfy a certain time interval with the target PO. The terminal device determines the monitoring occasion set (the plurality of target time units) of the power saving signal (such as PEI) according to the time interval (for example, which can be determined by the first time offset).

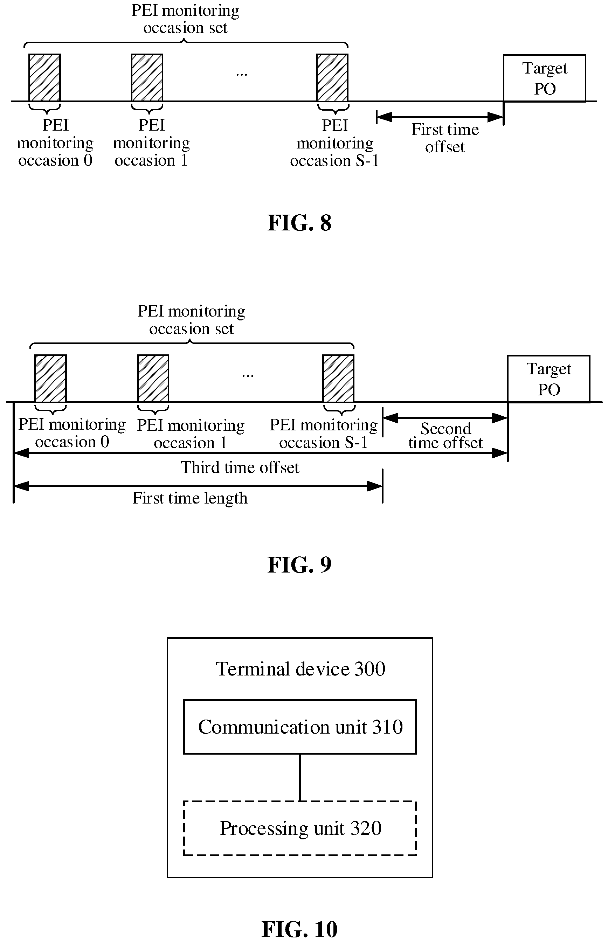

Specifically the time interval may be determined based on predetermined rules, predefined or network-configured. The monitoring occasions set of the power saving signal (such as PEI) is a set of monitoring occasions before a time point determined by the time interval, preferably, the monitoring occasions set is a set of temporally successive monitoring occasions. The first time offset corresponds to the time interval, as illustrated in FIG. 8, and S successive PEI monitoring occasions closest to the time point of the first time offset (PEI-offset) are a set of time units of channels/signals that carries the PEI. The PEI-offset is before a starting point of the target PO. Alternatively, S*X successive PEI monitoring occasions closest to the time point of the first time offset (PEI-offset) are the set of time units of channels/signals that carries the PEI. The PEI-offset is before the starting point of the target PO.

In some embodiments, the first time offset is agreed by protocol pre-configured, or the first time offset is configured by the network device.

In some embodiments, the plurality of target time units are within a first time length.

In some embodiments, a number of target time units within the first time length is greater than or equal to a first threshold.

In some embodiments, the first threshold is determined according to a number of PDCCH monitoring occasions within the target PO, or the first threshold is determined according to a number of actually transmitted SSBs indicated by SSB burst location information.

For example, the first threshold is greater than or equal to a number of PDCCH monitoring occasions within the target PO, or the first threshold is greater than or equal to a number of actually transmitted SSBs indicated by SSB burst location information.

In some embodiments, the terminal device and/or the network device determines a position of the first time length according to a second time offset and a third time offset.

The second time offset is the offset between an end position of the first time length and a starting position of the target PO, and the third time offset is an offset between a starting position of the first time length and the starting position of the target PO.

For example, as illustrated in FIG. 9, a set of PEI monitoring occasions (a plurality of target time units) is within a first time length, and the position of the first time length may be determined according to a second time offset (PEI-offset 2) and a third time offset (PEI-offset 3).

In some embodiments, the third time offset is greater than or equal to a second threshold. To ensure that a number of target time units within the first time length is greater than or equal to a first threshold value. For example, a minimum value of the third time offset needs to be defined according to the number of target time units within the first time length.

In some embodiments, the second time offset and/or the third time offset are agreed by protocol or pre-configured, or the second time offset and/or the third time offset are configured by the network device.

In some embodiments, the first time length is greater than or equal to a target value, and the target value is equal to a product of a number of target time units within the first time length and a minimum time interval between the target time units. For example, when the number of PEI monitoring occasions within the first time length is greater than or equal to S, it is necessary to ensure that the first time length at least needs to reach S*t, and t is a minimum time interval between PEI monitoring occasions.

In some embodiments, target time units within the first time length that monitors the power saving signal are a set of successive time units in time domain.

For example, the resource for monitoring the power saving signal is a periodic resource, and the target time units within the first time length that monitor the power saving signal are a set of time units which are successive in time domain and occur periodically.

Therefore, in the embodiments of the present disclosure, the terminal device may monitor the power saving signal on a plurality of target time units, thereby realizing multi-beam transmission of the power saving signal.

In the embodiments of the present disclosure, the method for determining the Paging PDCCH monitoring occasions within the target PO can be reused, so as to determine the set of PEI monitoring occasions so that the implementation is simple and the complexity is low, and the multi-beam transmission of the PEI can be realized. The first time length that includes the set of PEI monitoring occasions (a plurality of target time units) can be determined based on the first time offset, or the first time length of that includes the set of PEI monitoring occasions (the plurality of target time units) can be determined based on the second time offset and the third time offset, thereby ensuring that the first time length includes a sufficient number of PEI monitoring occasions, thereby realizing multi-beam transmission of PEI.

The method embodiments of the present disclosure have been described in detail above with reference to FIGS. 6 to 9, and the device embodiments of the present disclosure will be described in detail below with reference to FIGS. 10 to 14. It should be understood that the device embodiments and the method embodiments correspond to each other, and similar descriptions may refer to the method embodiments.

FIG. 10 illustrates a schematic block diagram of a terminal device 300 according to the embodiments of the present disclosure. As illustrated in FIG. 10, the terminal device 300 includes:

a communication unit 310, configured to monitor a power saving signal on a plurality of target time units, the power saving signal indicating whether the terminal device is to monitor a physical downlink control channel (PDCCH), which carries paging indication information, on a target paging occasion (PO).

The plurality of target time units have a first correspondence relationship with a plurality of PDCCH monitoring occasions within the target PO, or the plurality of target time units have a second correspondence relationship with a plurality of Synchronization Signal Blocks (SSBs).

In some embodiments, in a case that the plurality of target time units have the first correspondence relationship with the plurality of PDCCH monitoring occasions within the target PO, the terminal device 300 further includes a processing unit 320.

The processing unit 320 determines the target time units according to the PDCCH monitoring occasions within the target PO and the first correspondence relationship.

In some embodiments, a number of the plurality of PDCCH monitoring occasions within the target PO is equal to a product of a first parameter and a number of actually transmitted SSBs indicated by SSB burst position information, the first parameter indicating a number of PDCCH monitoring occasions corresponding to each SSB.

In some embodiments, in the first correspondence relationship, the target time units satisfy a one-to-one or many-to-one relationship with the PDCCH monitoring occasions.

In some embodiments, the first correspondence relationship is agreed by protocol or pre-configured, or the first correspondence relationship is configured by a network device.

In some embodiments, in a case that the plurality of target time units have the second correspondence relationship with the plurality of SSBs, the terminal device 300 further includes a processing unit 320.

The processing unit 320 determines the plurality of target time units according to the plurality of SSBs and the second correspondence relationship.

In some embodiments, a number of the plurality of target time units is equal to a number of the plurality of SSBs, or the number of the plurality of target time units is equal to a product of a second parameter and the number of the plurality of SSBs.

In some embodiments, the second parameter is agreed by protocol or pre-configured, or the second parameter is configured by the network device.

In some embodiments, in the second correspondence relationship, the target time units satisfy a one-to-one or many-to-one relationship with the SSB

In some embodiments, the second correspondence relationship is agreed by protocol or pre-configured, or the second correspondence relationship is configured by the network device.

In some embodiments, the plurality of SSBs are actually transmitted SSBs indicated by SSB burst position information.

In some embodiments, the plurality of target time units are determined according to the first time offset.

In some embodiments, the first time offset is agreed by protocol or pre-configured, or the first time offset is configured by the network device.

In some embodiments, the plurality of target time units are within a first time length.

In some embodiments, the number of target time units within the first time length is greater than or equal to a first threshold.

In some embodiments, the first threshold is determined according to the number of PDCCH monitoring occasions within the target PO, or the first threshold is determined according to the number of actually transmitted SSBs indicated by SSB burst position information.

In some embodiments, the first threshold is greater than or equal to the number of PDCCH monitoring occasions within the target PO, or the first threshold is greater than or equal to the number of actually transmitted SSBs indicated by SSB burst location information.

In some embodiments, the terminal device 300 further includes a processing unit 320.

The processing unit 320 determines a position of the first time length according to a second time offset and a third time offset.

The second time offset is an offset between an end position of the first time length and a starting position of the target PO, and the third time offset is an offset between a starting position of the first time length and the starting position of the target PO.

In some embodiments, the third time offset is greater than or equal to a second threshold.

In some embodiments, the second time offset and/or the third time offset are agreed by protocol or pre-configured, or the second time offset and/or the third time offset are configured by the network device.

In some embodiments, the first time length is greater than or equal to a target value, and the target value is equal to a product of the number of target time units within the first time length and a minimum time interval between the target time units.

In some embodiments, target time units within the first time length that monitors the power saving signal are a set of successive time units in time domain.

In some embodiments, the power saving signal is carried by at least one of: the PDCCH, a Tracking Reference Signal TRS, a Channel State Information Reference Signal (CSI-RS), or a Secondary Synchronization Signal (SSS).

In some embodiments, the power saving signal is a paging early indication (PEI).

In some embodiments, the communication unit described above may be a communication interface or a transceiver, or an input-output interface of a communication chip or a system-on-chip. The processing unit may be one or more processors.

It should be understood that the terminal device 300 according to the embodiments of the present disclosure may correspond to the terminal device in the embodiments of the method of the present disclosure, and the above and other operations and/or functions of the individual units in the terminal device 300 to implement the corresponding processes of the terminal device in the method 200 illustrated in FIG. 6 are not repeated herein for simplicity.

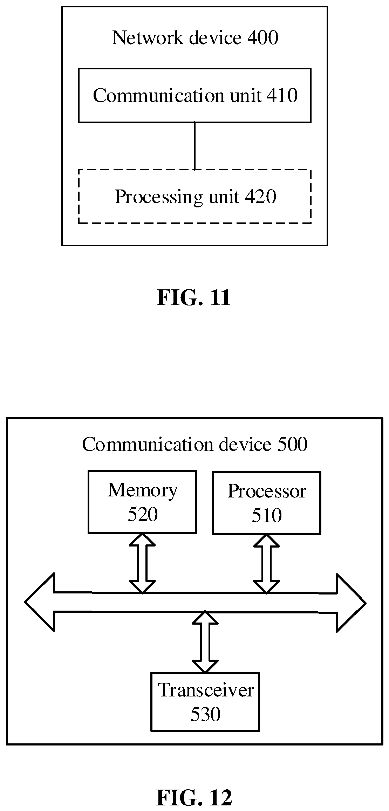

FIG. 11 illustrates a schematic block diagram of a network device 400 according to the embodiments of the present disclosure. As illustrated in FIG. 11, the network device 400 includes:

a communication unit 410, configured to transmit a power saving signal to the terminal device on a plurality of target time units, the power saving signal indicating whether the terminal device is to monitor a physical downlink control channel (PDCCH), which carries paging indication information, on a target Paging Occasion (PO).

The plurality of target time units have a first correspondence relationship with a plurality of PDCCH monitoring occasions within the target PO, or the plurality of target time units have a second correspondence relationship with a plurality of Synchronization Signal Blocks (SSBs).

In some embodiments, in a case that the plurality of target time units have the first correspondence relationship with the plurality of PDCCH monitoring occasions within the target PO, the network device 400 further includes a processing unit 420.

The processing unit 420 is configured to determine the target time units according to the PDCCH monitoring occasions within the target PO and the first correspondence relationship.

In some embodiments, a number of the plurality of PDCCH monitoring occasions within the target PO is equal to a product of a first parameter and a number of actually transmitted SSBs indicated by SSB burst position information, the first parameter indicating a number of PDCCH monitoring occasions corresponding to each SSB.

In some embodiments, in the first correspondence relationship, the target time units satisfy a one-to-one or many-to-one relationship with the PDCCH monitoring occasions.

In some embodiments, the first correspondence relationship is agreed by protocol or pre-configured, or the first correspondence relationship is configured by the network device.

In some embodiments, in a case that the plurality of target time units have the second correspondence relationship with the plurality of SSBs, the network device 400 further includes a processing unit 420.

The processing unit 420 is configured to determine the plurality of target time units according to the plurality of SSBs and the second correspondence relationship.

In some embodiments, a number of the plurality of target time units is equal to a number of the plurality of SSBs, or the number of the plurality of target time units is equal to a product of a second parameter and a number of the plurality of SSBs.

In some embodiments, the second parameter is agreed by protocol or pre-configured, or the second parameter is configured by the network device.

In some embodiments, in the second correspondence relationship, the target time units satisfy a one-to-one or many-to-one relationship with the SSB.

In some embodiments, the second correspondence relationship is agreed by protocol or pre-configured or the second correspondence relationship is configured by the network device.

In some embodiments, the plurality of SSBs are actually transmitted SSBs indicated by SSB burst location information.

In some embodiments, the plurality of target time units are determined according to the first time offset.

In some embodiments, the first time offset is agreed by protocol or pre-configured, or the first time offset is configured by the network device.

In some embodiments, the plurality of target time units are within a first time length.

In some embodiments, a number of target time units within the first time length is greater than or equal to a first threshold.

In some embodiments, the first threshold is determined according to a number of PDCCH monitoring occasions within the target PO, or the first threshold is determined according to a number of actually transmitted SSBs indicated by the SSB burst position information.

In some embodiments, the first threshold is greater than or equal to the number of PDCCH monitoring occasions within the target PO, or the first threshold is greater than or equal to the number of actually transmitted SSBs indicated by SSB burst position information.

In some embodiments, the network device 400 further includes a processing unit 420.

The processing unit 420 is configured to determine a position of the first time length according to a second time offset and a third time offset.

The second time offset is an offset between an end position of the first time length and a starting position of the target PO, and the third time offset is an offset between a starting position of the first time length and the starting position of the target PO.

In some embodiments, the third time offset is greater than or equal to a second threshold.

In some embodiments, the second time offset and/or the third time offset are agreed by protocol or pre-configured, or the second time offset and/or the third time offset are configured by the network device.

In some embodiments, the first time length is greater than or equal to a target value, and the target value is equal to a product of a number of target time units within the first time length and a minimum time interval between the target time units.

In some embodiments, target time unit within the first time length that monitor the power saving signal are a set of successive time units in time domain.

In some embodiments, the power saving signal is carried by at least one of: the PDCCH, a Tracking Reference Signal TRS, a Channel State Information Reference Signal (CSI-RS), or a Secondary Synchronization Signal (SSS).

In some embodiments, the power saving signal is a paging early indication (PEI).

In some embodiments, the communication unit described above may be a communication interface or a transceiver, or an input-output interface of a communication chip or a system-on-chip. The processing unit may be one or more processors.

It should be understood that the network device 400 according to the embodiments of the present disclosure may correspond to the terminal device in the embodiments of the method of the present disclosure, and the above and other operations and/or functions of the individual units in the network device 400 to implement the corresponding processes of the network device in the method 200 illustrated in FIG. 6 are not repeated herein for simplicity.

FIG. 12 is a schematic structural diagram of a communication device 500 provided by the embodiments of the present disclosure. The communication device 500 illustrated in FIG. 12 includes a processor 510 that may call and run a computer program from memory, so as to implement the method in the embodiments of the present disclosure.

In some embodiments, as illustrated in FIG. 12, the communication device 500 may further include a memory 520. The processor 510 may call and run a computer program from memory 520 to implement the method in the embodiments of the present disclosure.

The memory 520 may be a separate device independent of the processor 510 or may be integrated into the processor 510.

In some embodiments, as illustrated in FIG. 12, the communication device 500 may further include a transceiver 530. The processor 510 may control the transceiver 530 to communicate with other devices, and in particular, may control the transceiver 530 to transmit information or data to other devices, or receive information or data from other devices.

The transceiver 530 may include a transmitter and a receiver. The transceiver 530 may further include antennas, and the number of the antennas may be one or more.

In some embodiments, specifically, the communication device 500 may be a network device of the embodiments of the present disclosure, and the communication device 500 may implement corresponding processes implemented by the network device in various methods of the embodiment of the present disclosure, which will not be repeated herein for simplicity.

In some embodiments, specifically, the communication device 500 may be a terminal device of the embodiments of the present disclosure, and the communication device 500 may implement corresponding processes implemented by the terminal device in various methods of the embodiments of the present disclosure, which will not be repeated herein for simplicity.

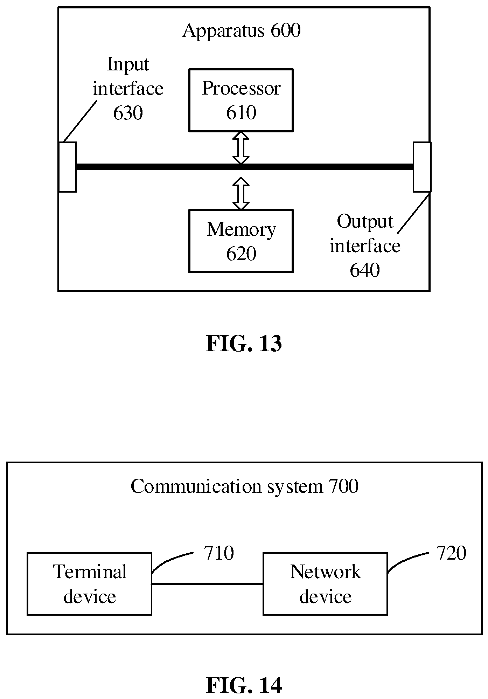

FIG. 13 is a schematic structural diagram of a device according to the embodiments of the present disclosure. As illustrated in FIG. 13, the device 600 s includes a processor 610 that may call and run a computer program from memory to implement the method in the embodiments of the present disclosure.

In some embodiments, as illustrated in FIG. 13, device 600 may also include a memory 620. The processor 610 may call and run a computer program from memory 620 to implement the method in the embodiments of the present disclosure.

The memory 620 may be a separate device independent of the processor 610 or may be integrated into the processor 610.

In some embodiments, the device 600 may also include an input interface 630. The processor 610 may control the input interface 630 to communicate with other devices or chips, and in particular, may control the input interface 630 to obtain information or data sent by other devices or chips.

In some embodiments, the device 600 may also include an output interface 640. The processor 610 may control the output interface 640 to communicate with other devices or chips, and in particular, may control the output interface 640 to output information or data to other devices or chips.

In some embodiments, the device may be applied to the network device in the embodiments of the present disclosure, and the device may implement corresponding processes implemented by the network device in various methods of the embodiments of the present disclosure, which will not be repeated here for simplicity.

In some embodiments, the device may be applied to the terminal device in the embodiments of the present disclosure, and the device may implement corresponding processes implemented by the terminal device in various methods of the embodiments of the present disclosure, which will not be repeated here for simplicity.

In some embodiments, the device mentioned in the embodiments of the present disclosure may also be a chip. For example, the device may be a system-level chip, system chip, chip system or System on a Chip (SoC).

FIG. 14 is a schematic block diagram of a communication system 700 provided by the embodiments of the present disclosure. As illustrated in FIG. 14, the communication system 700 includes a terminal device 710 and a network device 720.

The terminal device 710 may be configured to implement the corresponding functions implemented by the terminal device in the above method, and the network device 720 may be configured to implement the corresponding functions implemented by the network device in the above method, which will not be repeated herein for simplicity.

It should be understood that the processor of the embodiments of the present disclosure may be an integrated circuit chip with signal processing capability. In the implementation process, the steps of the above method embodiments may be accomplished by integrated logic circuit of hardware or instructions in the form of software in the processor. The processor may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. The methods, steps and logic block diagrams disclosed in embodiments of the present disclosure may be implemented or executed. The general purpose processor may be a microprocessor or the processor may be any conventional processor or the like. The steps of the method disclosed in combination with the embodiment of the present disclosure may be directly embodied as the execution of the hardware decoding processor, or the combined execution of the hardware and software modules in the decoding processor. The software module may be located in Random Access Memory (RAM), flash memory, read-only memory, programmable read-only memory or electrically erasable programmable memory, registers and other storage media mature in the art. The storage medium is located in the memory, and the processor reads the information in the memory and completes the steps of the method in combination with its hardware.

It can be understood that the memory in the embodiments of the present disclosure may be volatile memory or non-volatile memory or may include both volatile and non-volatile memory. The nonvolatile memory may be Read-Only Memory (ROM), Programmable ROM (PROM), Erasable PROM (EPROM), Electrically Erasable EPROM (EEPROM), or flash memory. The volatile memory may be a Random Access Memory (RAM) which is used as an external cache. By way of illustration but not limitation, many forms of RAM are available, such as static random access memory (SRAM), dynamic random access memory (DRAM), synchronous dynamic random access memory (SDRAM), double data rate synchronous dynamic random access memory (DDR SDRAM), enhanced synchronous dynamic RAM (ESDRAM), synchronous connected dynamic random access memory (SLDRAM), and Direct Rambus RAM(DR RAM). It should be noted that the memory of the systems and methods described herein is intended to include but not limited to these and any other suitable types of memory.

It should be understood that the above memory described above is exemplary but not limitation. For example, the memory in the embodiments of the present disclosure may also be SRAM, DRAM, SDRAM, DDR SDRAM, ESDRAM, ESDRAM, SLDRAM, DR RAM, etc. That is, the memory in the embodiments of the present disclosure is intended to include but not limited to these and any other suitable types of memory.

The embodiment of the disclosure also provides a computer readable storage medium for storing computer programs.

In some embodiments, the computer-readable storage medium may be applied to the network device in the embodiments of the present disclosure, and the computer program causes the computer to execute the corresponding processes implemented by the network device in various methods of the embodiment of the present disclosure, which is not repeated herein for simplicity.

In some embodiments, the computer-readable storage medium may be applied to the terminal device in the embodiments of the present disclosure, and the computer program causes the computer to execute corresponding processes implemented by the terminal device in the respective methods of the embodiment of the present disclosure, which will not be repeated herein for simplicity.

The embodiments of the disclosure also provide a computer program product, including computer program instructions.

In some embodiments, the computer program product may be applied to the network device in the embodiments of the present disclosure, and the computer program instructions enable the computer to execute the corresponding processes implemented by the network device in various methods of the embodiments of the present disclosure, which is not repeated herein for simplicity.

In some embodiments, the computer program product may be applied to the terminal device in the embodiments of the present disclosure, and the computer program instructions cause the computer to execute corresponding processes implemented by the terminal device in various methods of the embodiments of the present disclosure, which are not repeated herein for simplicity.

The embodiments of the disclosure also provide a computer program.

In some embodiments, the computer program may be applied to a network device in the embodiments of the present disclosure and, when the computer program is executed on the computer, causes the computer to execute the corresponding processes implemented by the network device in various methods of the embodiments of the present disclosure, which is not repeated herein for simplicity.

In some embodiments, the computer program may be applied to a terminal device in the embodiments of the present disclosure and, when the computer program is executed on the computer, causes the computer to execute the corresponding processes implemented by the terminal device in various methods of the embodiments of the present disclosure, which is not repeated herein for simplicity.

Additional examples

In example 1, there is provided a method of wireless communication, comprising:

monitoring, by a terminal device, a power saving signal on a plurality of target time units, wherein the power saving signal indicates whether the terminal device is to monitor a Physical Downlink Control Channel (PDCCH), which carries paging indication information, on a target Paging Occasion (PO);

wherein the plurality of target time units have a first correspondence relationship with a plurality of PDCCH monitoring occasions within the target PO, or the plurality of target time units have a second correspondence relationship with a plurality of Synchronization Signal Blocks (SSBs).

In example 2, the method of example 1, wherein in a case that the plurality of target time units have the first correspondence relationship with the plurality of PDCCH monitoring occasions within the target PO, the method further comprises:
determining, by the terminal device, the plurality of target time units according to the plurality of PDCCH monitoring occasions within the target PO and the first correspondence relationship.

In example 3, the method of example 2, wherein a number of the plurality of PDCCH monitoring occasions within the target PO is equal to a product of a first parameter and a number of actually transmitted SSBs indicated by SSB burst position information, wherein the first parameter indicates a number of PDCCH monitoring occasions corresponding to each SSB.

In example 4, the method of any one of examples 1 to 3, wherein in the first correspondence relationship, the target time units satisfy a one-to-one or many-to-one relationship with the PDCCH monitoring occasions.

In example 5, the method of any one of examples 1 to 4, wherein the first correspondence relationship is agreed by protocol or pre-configured, or the first correspondence relationship is configured by a network device.

In example 6, the method of example 1, wherein in a case that the plurality of target time units have the second correspondence relationship with the plurality of SSBs,

the method further comprises:

determining, by the terminal device, the plurality of target time units according to the plurality of SSBs and the second correspondence relationship.

In example 7, the method of example 6, wherein a number of the plurality of target time units is equal to a number of the plurality of SSBs, or the number of the plurality of target time units is equal to a product of a second parameter and the number of the plurality of SSBs.

In example 8, the method of example 7, wherein the second parameter is agreed by protocol or pre-configured, or the second parameter is configured by a network device.

In example 9, the method of any one of examples 1 and 6 to 8, wherein

in the second correspondence relationship, the target time units satisfy a one-to-one or many-to-one relationship with the SSB.

In example 10, the method of any one of examples 1 and 6 to 9, wherein the second correspondence relationship is agreed by protocol or pre-configured, or the second correspondence relationship is configured by a network device.

In example 11, the method of any one of examples 1 and 6 to 10, wherein the plurality of SSBs are actually transmitted SSBs indicated by SSB burst position information.

In example 12, the method of any one of examples 1 to 11, wherein the plurality of target time units are determined according to a first time offset.

In example 13, the method of example 12, wherein the first time offset is agreed by protocol or pre-configured, or the first time offset is configured by a network device.

In example 14, the method of any one of examples 1 to 11, wherein the plurality of target time units are within a first time length.

In example 15, the method of example 14, wherein a number of the target time units within the first time length is greater than or equal to a first threshold.

In example 16, the method of example 15, wherein the first threshold is determined according to a number of PDCCH monitoring occasions within the target PO, or the first threshold is determined according to a number of actually transmitted SSBs indicated by SSB burst position information.

In example 17, the method of example 15 or 16, wherein the first threshold is greater than or equal to a number of PDCCH monitoring occasions within the target PO, or the first threshold is greater than or equal to a number of actually transmitted SSBs indicated by SSB burst position information.

In example 18, the method of any one of examples 14 to 17, wherein the method further comprises:

determining, by the terminal device, a position of the first time length according to a second time offset and a third time offset;

wherein the second time offset is an offset between an end position of the first time length and a starting position of the target PO, and the third time offset is an offset between a starting position of the first time length and the starting position of the target PO.

In example 19, the method of example 18, wherein the third time offset is greater than or equal to a second threshold.

In example 20, the method of example 18 or 19, wherein the second time offset and/or the third time offset are agreed by protocol or pre-configured, or the second time offset and/or the third time offset are configured by a network device.

In example 21, the method of any one of examples 14 to 20, wherein the first time length is greater than or equal to a target value, wherein the target value is equal to a product of a number of target time units within the first time length and a minimum time interval between the target time units.

In example 22, the method of any one of examples 14 to 21, wherein target time units within the first time length that monitor the power saving signal are a set of successive time units in time domain.

In example 23, the method of any one of examples 1 to 22, wherein the power saving signal is carried by at least one of: the PDCCH, a Tracking Reference Signal (TRS), a Channel State Information Reference Signal (CSI-RS), or a Secondary Synchronization Signal (SSS).

In example 24, the method of any one of examples 1 to 23, wherein the power saving signal is a paging early indication (PEI).

In example 25, there is provided a method of wireless communication, comprising:

transmitting, by a network device, a power saving signal on a plurality of target time units, wherein the power saving signal indicates whether the terminal device is to monitor a Physical Downlink Control Channel (PDCCH), which carries paging indication information, on a target paging occasion (PO);

wherein the plurality of target time units have a first correspondence relationship with the plurality of PDCCH monitoring occasions within the target PO, or the plurality of target time units have a second correspondence relationship with a plurality of Synchronization Signal Blocks (SSBs).

In example 26, the method of example 25, wherein in a case that the plurality of target time units have the first correspondence relationship with the plurality of PDCCH monitoring occasions within the target PO,
the method further comprises:
determining, by the network device, the plurality of target time units according to the plurality of PDCCH monitoring occasions within the target PO and the first correspondence relationship.
In example 27, the method of example 26, wherein
a number of the plurality of PDCCH monitoring occasions within the target PO is equal to a product of a first parameter and a number of actually transmitted SSBs indicated by SSB burst position information, wherein the first parameter indicates a number of PDCCH monitoring occasions corresponding to each SSB.
In example 28, the method of any one of examples 25 to 27, wherein in the first correspondence relationship, the target time units satisfy a one-to-one or many-to-one relationship with the PDCCH monitoring occasions.
In example 29, the method of any one of examples 25 to 28, wherein the first correspondence relationship is agreed by protocol or pre-configured, or the first correspondence relationship is configured by the network device.
In example 30, the method of example 25, wherein in a case that the plurality of target time units have the second correspondence relationship with the plurality of SSBs,
the method further comprises:
determining, by the network device, the plurality of target time units according to the plurality of SSBs and the second correspondence relationship.
In example 31, the method of example 30, wherein a number of the plurality of target time units is equal to a number of the plurality of SSBs, or the number of the plurality of target time units is equal to a product of a second parameter and the number of the plurality of SSBs.
In example 32, the method of example 31, wherein the second parameter is agreed by protocol or pre-configured, or the second parameter is configured by the network device.
In example 33, the method of any one of examples 25 and 30 to 32, wherein
in the second correspondence relationship, the target time units satisfy a one-to-one or many-to-one relationship with the SSB.
In example 34, the method of any one of examples 25, 30 to 33, wherein the second correspondence relationship is or agreed by protocol or pre-configured, or the second correspondence relationship is configured by the network device.
In example 35, the method of any one of examples 25 and 30 to 34, wherein the plurality of SSBs are actually transmitted SSBs indicated by SSB burst position information.
In example 36, the method of any one of examples 25 to 35, wherein the plurality of target time units are determined according to a first time offset.
In example 37, the method of example 36, wherein the first time offset is agreed by protocol or pre-configured, or the first time offset is configured by the network device.
In example 38, the method of any one of examples 25 to 35, wherein the plurality of target time units are within a first time length.
In example 39, the method of example 38, wherein a number of target time units within the first time length is greater than or equal to a first threshold.
In example 40, the method of example 39, wherein the first threshold is determined according to a number of PDCCH monitoring occasions within the target PO, or the first threshold is determined based on the number of actually transmitted SSBs indicated by SSB burst position information.
In example 41, the method of example 39 or 40, wherein the first threshold is greater than or equal to a number of PDCCH monitoring occasions within the target PO, or the first threshold is greater than or equal to a number of actually transmitted SSBs indicated by SSB burst position information.
In example 42, the method of any one of examples 38 to 41, wherein the method further comprises:

determining, by the network device, a position of the first time length according to a second time offset and a third time offset;

wherein the second time offset is an offset between an end position of the first time length and a starting position of the target PO, and the third time offset is an offset between a starting position of the first time length and the starting position of the target PO.

In example 43, the method of example 42, wherein the third time offset is greater than or equal to a second threshold.

In example 44, the method of example 42 or 43, wherein the second time offset and/or the third time offset are agreed by protocol or pre-configured, or the second time offset and/or the third time offset are configured by the network device.

In example 45, the method of any one of examples 38 to 44, wherein the first time length is greater than or equal to a target value, wherein the target value is equal to a product of a number of target time units within the first time length and a minimum time interval between the target time units.

In example 46, the method of any one of examples 38 to 45, wherein target time units within the first time length that monitor the power saving signal are a set of successive time units in time domain.

In example 47, the method of any one of examples 25 to 46, wherein the power saving signal is carried by at least one of: the PDCCH, a Tracking Reference Signal (TRS), a Channel State Information Reference Signal (CSI-RS), or a Secondary Synchronization Signal (SSS).

In example 48, the method of any one of examples 25 to 47, wherein the power saving signal is a paging early indication (PEI).

In example 49, there is provided a terminal device, comprising:

a communication unit, configured to monitor a power saving signal power on a plurality of target time units, wherein the power saving signal indicates whether the terminal device is to monitor a Physical Downlink Control Channel (PDCCH), which carries paging indication information, on a target paging time (PO);

wherein the plurality of target time units have a first correspondence relationship with the plurality of PDCCH monitoring occasions within the target PO, or the plurality of target time units have a second correspondence relationship with a plurality of synchronization signal blocks (SSBs).

In example 50, there is provided a network device, comprising:

a communication unit, configured to transmit a power saving signal to the terminal device on a plurality of target time units, wherein the power saving signal indicates whether the terminal device is to monitor a Physical Downlink Control Channel (PDCCH), which carries a paging indication information, on a target paging time (PO);

wherein the plurality of target time units have a first correspondence relationship with the plurality of PDCCH monitoring occasions within the target PO, or the plurality of target time units have a second correspondence relationship with a plurality of Synchronization Signal Blocks (SSBs).

In example 51, there is provided a terminal device, comprising a processor and a memory, wherein the memory is configured to store a computer program, wherein the processor is configured to call and run the computer program stored in the memory to perform the method of any one of examples 1 to 24.

In example 52, there is provided a network device, comprising a processor and a memory, wherein the memory is configured to store a computer program, wherein the processor is configured to call and run the computer program stored in the memory to perform the method of any one of examples 25 to 48.

In example 53, there is provided a chip, comprising a processor, configured to call and run a computer program in a memory to enable a device having the chip installed therein to perform the method of any one of examples 1 to 24.

In example 54, there is provided a chip, comprising a processor, configured to call and run a computer program in a memory to enable a device with the chip installed therein to perform the method of any one of examples 25 to 48.

In example 55, there is provided a computer-readable storage medium, configured to store a computer program, wherein the computer program enables a computer to perform the method of any one of examples 1 to 24.

In example 56, there is provided a computer-readable storage medium configured to store a computer program, wherein the computer program enables a computer to perform the method of any one of examples 25 to 48.

In example 57, there is provided a computer program product, comprising computer program instructions, wherein the computer program instruction enables a computer to perform the method of any one of examples 1 to 24.

In example 58, there is provided a computer program product, comprising computer program instructions, wherein the computer program instruction enables a computer to perform the method of any one of examples 25 to 48.

In example 59, there is provided a computer program, wherein the computer program enables a computer to perform the method of any one of examples 1 to 24.

In example 60, there is provided a computer program, wherein the computer program enables a computer to perform the method of any one of examples 25 to 48.

Those of ordinary skill in the art would appreciate that the units and algorithm steps of various embodiments described in connection with the embodiments disclosed herein can be implemented in electronic hardware or a combination of computer software and electronic hardware. Whether these functions are performed in hardware or software depends on the specific application and design constraints of the technical solutions. Professional technicians may use different methods to implement the described functionality for each specific application, but such implementations should not be considered to be beyond the scope of the present disclosure.

Those skilled in the art would clearly appreciate that, for convenience and conciseness of description, the specific operating processes of the described systems, devices and units above may refer to the corresponding processes in the aforementioned method embodiments and will not be repeated herein.

In several embodiments provided herein, it should be understood that the disclosed systems, devices and methods may be implemented in other ways. For example, the described embodiments of the devices above are only schematic, for example, the division of the unit is only a logical function division. In practice, there may be another division mode in actual implementation. For example, multiple units or components may be combined or integrated into another system, or some features may be ignored or not executed. On the other hand, the mutual coupling or direct coupling or communication connection illustrated or discussed may be indirect coupling or communication connection through some interfaces, devices or units, and may be electrical, mechanical or other forms.

The unit illustrated as separate components may or may not be physically separated, and the component displayed as a unit may or may not be a physical unit, that is, it may be located in one place or may be distributed to a plurality of network units. Some or all of the units may be selected according to the actual needs to achieve the purpose of the embodiments.

Furthermore, each functional unit in each embodiment of the present disclosure may be integrated into one processing unit, each unit may exist physically separate, or two or more units may be integrated into one unit.

The functions may be stored in a computer readable storage medium if the functions are implemented in the form of software functional units and sold or used as independent products. With this understanding, the technical solutions of the present disclosure essentially or the part that contributes to the related air or the part of the technical solution may be embodied in the form of a software product, which is stored in a storage medium, including instructions for causing a computer device (which may be a personal computer, a server, a network device, etc.) to perform all or part of the steps of the method described in various embodiments of the present disclosure. The aforementioned storage media includes USB flash disk, mobile hard disk, ROM, RAM, a magnetic disc or an optical disc and other medium capable of storing program codes.

The above is only the specific embodiments of the present disclosure, but the scope of protection of the present disclosure is not limited to this. The changes or replacements within the technical scope disclosed in the present disclosure easily performed by any technical personnel familiar with the technical field shall be covered by the protection scope of the present disclosure. Therefore, the protection scope of this disclosure shall be subject to the scope of protection of the claims.

**Claims**

1. A terminal device, comprising:

   a communication unit (310), configured to monitor a power saving signal on a plurality of target time units, wherein the power saving signal indicates whether the terminal device is to monitor a Physical Downlink Control Channel, PDCCH, which carries paging indication information, on a target Paging Occasion, PO;
   wherein the plurality of target time units have a first correspondence relationship with a plurality of PDCCH monitoring occasions within the target PO, or the plurality of target time units have a second correspondence relationship with a plurality of Synchronization Signal Blocks, SSBs,
   wherein the terminal device further comprises:
   a processing unit (320), configured to determine, in a case that the plurality of target time units have the second correspondence relationship with the plurality of SSBs, the plurality of target time units according to the plurality of SSBs and the second correspondence relationship.

2. The terminal device of claim 1, wherein a number of the plurality of target time units is equal to a product of a second parameter and a number of the plurality of SSBs.

3. The terminal device of claim 1 or 2, wherein

in the second correspondence relationship, the target time units satisfy a one-to-one or many-to-one relationship with the SSB;

wherein the second correspondence relationship is agreed by protocol or pre-configured, or the second correspondence relationship is configured by a network device;

wherein the power saving signal is carried by the PDCCH, and the power saving signal is a paging early indication, PEI.

4. The terminal device of any one of claims 1 to 3, wherein the plurality of SSBs are actually transmitted SSBs indicated by SSB burst position information.

5. The terminal device of any one of claims 1 to 4, wherein the plurality of target time units are determined according to a first time offset.

6. The terminal device of claim 5, wherein the first time offset is configured by a network device.

7. The terminal device of any one of claims 1 to 4, wherein the plurality of target time units are within a first time length.

8. The terminal device of claim 7, wherein a number of the target time units within the first time length is greater than or equal to a first threshold.

9. The terminal device of claim 8, wherein the first threshold is determined according to a number of actually transmitted SSBs indicated by SSB burst position information.

10. The terminal device of claim 8 or 9, wherein the first threshold is greater than or equal to a number of actually transmitted SSBs indicated by SSB burst position information.

11. A network device, comprising:

a communication unit (410), configured to transmit a power saving signal to a terminal device on a plurality of target time units, wherein the power saving signal indicates whether the terminal device is to monitor a Physical Downlink Control Channel, PDCCH, which carries paging indication information, on a target paging occasion, PO;

wherein the plurality of target time units have a first correspondence relationship with the plurality of PDCCH monitoring occasions within the target PO, or the plurality of target time units have a second correspondence relationship with a plurality of Synchronization Signal Blocks, SSBs,

wherein the network device further comprises:

a processing unit (420), configured to determine, in a case that the plurality of target time units have the second correspondence relationship with the plurality of SSBs, the plurality of target time units according to the plurality of SSBs and the second correspondence relationship.

12. The network device of claim 11, wherein a number of the plurality of target time units is equal to a product of a second parameter and a number of the plurality of SSBs.

13. The network device of claim 11 or 12, wherein

in the second correspondence relationship, the target time units satisfy a one-to-one or many-to-one relationship with the SSB;

wherein the second correspondence relationship is or agreed by protocol or pre-configured, or the second correspondence relationship is configured by the network device;

wherein the power saving signal is carried by the PDCCH, and the power saving signal is a paging early indication, PEI.

14. The network device of any one of claims 11 to 13, wherein the plurality of SSBs are actually transmitted SSBs indicated by SSB burst position information.

15. The network device of any one of claims 11 to 14, wherein the plurality of target time units are determined according to a first time offset.

**16.** The network device of claim 15, wherein the first time offset is configured by the network device.

**17.** The network device of any one of claims 11 to 14, wherein the plurality of target time units are within a first time length.

**18.** The network device of claim 17, wherein a number of target time units within the first time length is greater than or equal to a first threshold.

**19.** The network device of claim 18, wherein the first threshold is determined based on a number of actually transmitted SSBs indicated by SSB burst position information.

**20.** The network device of claim 18 or 19, wherein the first threshold is greater than or equal to a number of actually transmitted SSBs indicated by SSB burst position information.

**100**

**FIG. 1**

Power saving
signal indicates
to monitor

Power saving
signal indicates
not to monitor

Power saving
signal indicates
not to monitor

Power saving
signal indicates
to monitor

PDCCH0    PDCCH1    PDCCH2    PDCCH3

DRX cycle

**FIG. 2**

| UE group 1 | UE group 2 | ... | UE group N | CRC(PS-RNTI) |

Wake-up indication    Scell dormancy indication

**FIG. 3**

Monitoring position for
the power saving signal

DRX On Duration

Minimum time
interval

Offset of the power
saving time

**FIG. 4**

DRX cycle

......

PF

PO

**FIG. 5**

200

| Terminal device | | Network device |

S210, transmitting, by a network device, a power saving signal on a plurality of target time units, wherein the power saving signal indicates whether the terminal device is to monitor a PDCCH, which carries paging indication information, on a target PO; wherein the plurality of target time units have a first correspondence relationship with the plurality of PDCCH monitoring occasions within the target PO, or the plurality of target time units have a second correspondence relationship with a plurality of SSBs

S220, monitoring, by the terminal device, the power saving signal on the plurality of target time units

**FIG. 6**

PEI monitoring occasion set

PDCCH monitoring occasion set within a target PO

PEI monitoring occasion 0    PEI monitoring occasion 1    ...    PEI monitoring occasion S-1    PDCCH monitoring occasion 0    PDCCH monitoring occasion 1    ...    PDCCH monitoring occasion S-1

**FIG. 7**

PEI monitoring
occasion set

PEI
monitoring
occasion 0

PEI
monitoring
occasion 1

...

PEI
monitoring
occasion S-1

First time
offset

Target
PO

**FIG. 8**

PEI monitoring
occasion set

PEI monitoring
occasion 0

PEI monitoring
occasion 1

...

PEI monitoring
occasion S-1

Second
time offset

Target
PO

Third time offset

First time length

**FIG. 9**

Terminal device 300

Communication unit 310

Processing unit 320

**FIG. 10**

Network device 400

Communication unit 410

Processing unit 420

**FIG. 11**

Communication device 500

Memory
520

Processor
510

Transceiver
530

**FIG. 12**

Apparatus 600

Input
interface
630

Processor
610

Memory
620

Output
interface
640

**FIG. 13**

Communication system 700

Terminal
device

710

Network
device

720

**FIG. 14**